# EUROPÄISCHE PATENTANMELDUNG

(11) **EP 4 530 250 A1**
(43) Veröffentlichungstag der Anmeldung: **02.04.2025**
(21) Anmeldenummer: 23201014.0
(22) Anmeldetag: 29.09.2023
(51) Int. Cl.: C01B 3/00

(54) **WASSERSTOFF-LAGERUNG UND -TRANSPORT**

(71) Anmelder: Kausch, Peter, 50321 Brühl (DE); Wolf, Gert, 09599 Freiberg (DE); Klapoetke, Thomas M., 94145 Haidmuehle (DE); Neuenfeld, Steffen, 64409 Messel (DE); Grothues, Stefan, 53173 Bonn-Bad Godesberg (DE)
(72) Erfinder: Kausch, Peter, 50321 Brühl (DE); Wolf, Gert, 09599 Freiberg (DE); Klapoetke, Thomas M., 94145 Haidmuehle (DE); Neuenfeld, Steffen, 64409 Messel (DE); Grothues, Stefan, 53173 Bonn-Bad Godesberg (DE)
(74) Vertreter: dompatent von Kreisler Selting Werner - Partnerschaft von Patent- und Rechtsanwälten mbB

(57) **Zusammenfassung**

Verfahren zum Transport von Wasserstoff in einem Stoffkreislauf umfassend folgende Schritte:
a) Bereitstellen von Wasserstoff an einem ersten Ort
b) Umsetzung des Wasserstoffs direkt oder indirekt mit einer ersten BorVerbindung, um Borazan zu erhalten
c) Transport des Borazans an einen zweiten Ort
d) Freisetzung des Wasserstoffs aus dem Borazan unter Erhalt einer zweiten Borverbindung
e) Transport der zweiten Borverbindung direkt oder nach weiterer Umwandlung an den ersten Ort.

## Beschreibung

Die vorliegende Erfindung betrifft ein Verfahren zum Transport und zur Lagerung von Wasserstoff, insbesondere um Wasserstoff für viele Anwendungen handhabbar und für die Nutzer problemlos nutzbar zu machen.

Wasserstoff bringt als Energiespeicher eine Vielzahl von Vorteilen mit, insbesondere, dass bei der Verbrennung als Nebenprodukt nur Wasser entsteht.

Nachteilig ist, dass in Gasform die Energie pro Kubikmeter gering ist, sodass das Gas entweder komprimiert oder verflüssigt werden muss. Die Energiedichte beträgt ungefähr 1,4 kWh/m³ bei 700 bar und Rautemperatur oder 2,4 kWh/m³, wenn bei -253 °C verflüssigt.

Sowohl in komprimierter als auch verflüssigter Form sind die Lagerung und der Transport schwierig, weil apparativ aufwendig. Bei der Verflüssigung kommt hinzu, dass Energie für die Kühlung benötigt wird und während der Lagerung weiter Energie gebraucht wird, um die niedrigen Temperaturen aufrechtzuerhalten.

Es ist auch bekannt, Wasserstoff durch Einlagerung in Feststoffe absorptiv zu speichern, beispielsweise in Zeolithen oder es chemisch in andere Verbindungen umzuwandeln, beispielsweise Methanol, Ammoniak, etc. Für die Lagerung und den Transport wäre die absorptive Speicherung grundsätzlich ideal, allerdings sind dort die Energiedichten besonders gering.

Wenn Wasserstofferzeugung und -verbrauch in engem räumlichem Kontext stehen, ist der Transport in Gasform bei Normaldruck mittels Pipeline zu bevorzugen. Wenn dies nicht möglich ist oder wenn eine Lagerung des Wasserstoffs für einen längeren Zeitraum erforderlich ist, sind dies keine sinnvollen Möglichkeiten.

Es besteht daher weiterhin Bedarf nach Möglichkeiten des Transports oder der Lagerung von Wasserstoff, die zumindest einige Nachteile des Standes der Technik überwinden.

Gelöst wird die Aufgabe durch ein Verfahren zum Transport von Wasserstoff in einem Stoffkreislauf umfassend folgende Schritte:
a) Bereitstellen von Wasserstoff an einem ersten Ort
b) Umsetzung des Wasserstoffs direkt oder indirekt mit einer ersten Bor-Verbindung, um Borazan zu erhalten
c) Transport des Borazans an einen zweiten Ort
d) Freisetzung des Wasserstoffs aus dem Borazan unter Erhalt einer zweiten Borverbindung
e) Transport der zweiten Borverbindung direkt oder nach weiterer Umwandlung an den ersten Ort.

Erfindungsgemäß wird Wasserstoff an einem ersten Ort bereitgestellt. Dieser Wasserstoff kann auf vielfältigen Wegen erzeugt werden, beispielsweise durch Elektrolyse mittels elektrischen Stroms. Der Strom selbst kann in beliebiger Weise erzeugt werden, ist jedoch bevorzugt 'grün', d. h. beispielsweise durch Windenergie oder Solarzellen erzeugt.

Dieser Wasserstoff wird nun an einem ersten Ort mit einer Borverbindung umgesetzt, um Borazan zu erhalten. Borazan (H₃B-NH₃) kann in vielfältiger Weise erhalten werden. Solche Synthesen sind dem Fachmann grundsätzlich bekannt. In einer bevorzugten Ausführungsform wird zunächst Ammoniak aus dem Wasserstoff erzeugt:

Haber-Bosch-Verfahren: N₂ + 3 H₂ --> 2 NH₃

Anschließend kann Borazan beispielsweise durch Umsetzung mit Diboran (B₂H₆) erhalten werden:

Borazan-Synthese: 2 NH₃ + B₂H₆ --> 2 H₃B-NH₃

Auch andere Wege zur Synthese von Borazan sind möglich.

In einem weiteren Schritt erfolgt der Transport des Borazans an einen zweiten Ort. Borazan kann dabei als Feststoff vorliegen, was das Handling verfahrenstechnisch in der Herstellung, im Transport und in der finalen Wasserstofffreisetzungsreaktion vereinfachen kann. Das Borazan kann aber auch als wässrige Lösung vorliegen. Ein Flüssigkeitstransport, z.B. über Pumpen ist in Transport- und Lagertanks sowie in kontinuierlichen wie diskontinuierlichen Reaktionsapparaturen vor-teilhaft.

An dem zweiten Ort kann dann Wasserstoff aus dem Borazan freigesetzt werden, wobei eine Borverbindung als Nebenprodukt resultiert. Diese kann im Sinne einer Kreislaufwirtschaft am Wasserstofferzeugungsort wieder zur Borazanherstellung zur Verfügung stehen.

Eine Variante ist beispielsweise die Freisetzung des Wasserstoffs durch Erhitzen, wobei aus dem Borazan hexagonales (BN)x gebildet wird und Wasserstoff freigesetzt wird.

In einer anderen Ausführungsformen wird Borazan durch Zusatz von anorganischen oder organischen Säuren umgesetzt und neben Wasserstoff wird Borsäure bzw. Borat gebildet.

In einer besonders bevorzugten Ausführungsform des Verfahrens ist der Abstand zwischen dem ersten und dem zweiten Ort so, dass ein Transport des Wasserstoffs in Gasform, beispielsweise durch eine Pipeline, nicht möglich ist. Der Abstand kann beispielsweise 100 oder mehr km oder 500 oder mehr km betragen. So wäre es beispielsweise denkbar, den Wasserstoff in sonnenreichen Ländern nördlich oder südlich des Mittelmeers zu erzeugen, in Borazan umzuwandeln und dann im Norden Europas einzusetzen.

In einigen Ausführungsformen kann es sinnvoll sein, das Borazan zu lagern. Dabei kann die Lagerung sowohl am Ort der Erzeugung (dem ersten Ort), am Ort des Verbrauchs (dem zweiten Ort) oder an einem dritten Ort erfolgen, beispielsweise in einem Borazanspeicher.

Neben der Freisetzung des Wasserstoffs durch Erhitzen oder Säure kann auch die Freisetzung durch einen Katalysator, insbesondere einen heterogenen Katalysator erfolgen. Ein typischer heterogener Katalysatoren ist ein platinbasierter Katalysator.

In einer Ausführungsform der Erfindung sind die erste und die zweite Borverbindung identisch. In einer Ausführungsform sind die erste und die zweite Borverbindung verschieden. In beiden Fällen kann die Borverbindung, die nach Abgabe des Wasserstoffs erhalten wird, weiter umgewandelt werden, bevor sie an den ersten Ort transportiert wird.

Ein Beispiel wäre die Bildung von Wasserstoff aus Borazan mit Säuren, wobei Borat entsteht. Vor dem Transport könnte das Borat beispielsweise in hexagonales Bornitrid umgewandelt werden, das dann an den ersten Ort zurücktransportiert wird, um dort weiter in Diboran umgewandelt zu werden. Grundsätzlich ist ein Transport aber auch in der Form des Borates möglich.

In einigen Ausführungsformen der Erfindung ist es notwendig, die erhaltene zweite Borverbindung wieder in die erste Borverbindung umzuwandeln.

Eine Variante wäre, dass die erhaltene zweite Borverbindung Borsäure ist, die mit Harnstoff oder Ammoniak unter Stickstoffatmosphäre in hexagonales (BN)x umgewandelt wird und dann mit AlCl₃/Hel wieder in Borazan umgewandelt wird.

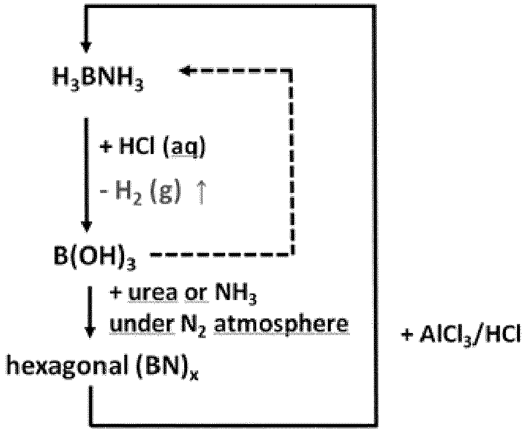

### Umsetzung mittels AlCl₃/HCl

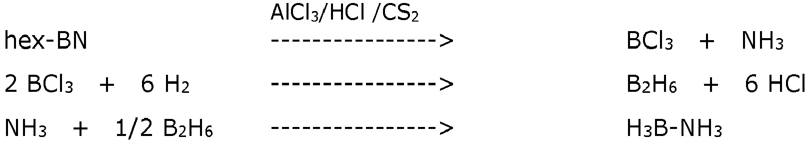

Dabei kann dann Diboran die erste und die zweite Borverbindung sein.

### Alternativ kann auch eine Umsetzung mit Hydrazin/Ammoniak erfolgen:

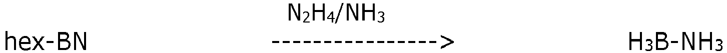

Die Reaktionsschemata sind vereinfacht.

Bei der Freisetzung von Wasserstoff entstehen neben Wasserstoff wasserstoffärmere Verbindungen auf Basis von BN; diese können chemisch wieder zu Borazan aufgearbeitet werden.

Das Besondere an der vorliegenden Erfindung ist, dass es sich um einen Stoffkreislauf handelt, bei dem die Borverbindung (beispielsweise als (BN)x) vom zweiten an den ersten Ort zurück transportiert wird, um dort wieder in Borazan umgewandelt werden zu können. Dadurch unterscheidet sich das Verfahren grundsätzlich von anderen Verfahren der chemischen Bindung, beispielsweise als Methanol, bei denen kein Stoffkreislauf benutzt wird.

Ein Aspekt der Erfindung ist auch die Verwendung von Borazan als Lagerungsform von Wasserstoff. So wie heute Gas in Gasspeichern vorbereitet wird, lässt sich Borazan verwenden, um Reserven von Wasserstoff zu lagern, die bei Bedarf verbraucht werden können. Es ist daher bevorzugt, dass der Lagerungszeitraum in dieser Ausführungsform mindestens 30 Tage oder mindestens 60 Tage oder auch länger beträgt.

Die Vorteile von Borazan gegenüber Ammoniak, Metallhydriden und Kohlenwasserstoffen als 'Wasserstoffspeicher' sind insbesondere:
- Borazan ist nicht giftig
- Borazan reagiert unter Normalbedingungen nicht mit Wasser unter Bildung explosiver Gase
- Borazan ist fest und nicht flüchtig
- Borazan gibt Wasserstoff bereits bei sehr moderaten Temperaturen ab etwa 50 °C wieder ab
- Borazan kann leicht recycled werden.

Die Erfindung wird durch das folgende Beispiel näher erläutert:

### Beispiel

Wasserstoff wird in einem Gebiet mit hoher Sonneneinstrahlung in Südspanien mithilfe von Strom aus Solarenergie erzeugt und mit Stickstoff in Ammoniak umgesetzt. Der Ammoniak wird mit BH₃ in Borazan umgewandelt. Das so erhaltene pulverförmige Borazan wird in einem entsprechend angepassten Schiff verladen und nach Bremerhaven transportiert. Dort wird das Borazan als Feststoff entladen, zum leichteren Weitertransport in wässrige Lösung gebracht und in Niedersachsen in einem Speicher unterirdisch gelagert. Von dort wird es bei Bedarf entnommen. Mit Hilfe von Säure wird Wasserstoff freigesetzt und der freigesetzte Wasserstoff über Pipelines zu Verbrauchern transportiert. Die erhaltene Borlösung wird nach Bremerhaven zurückgepumpt und von dort per Schiff nach Südspanien gebracht, wo die Borsäure über die Zwischenstufe hexagonales (BN)x wieder in Borazan umgewandelt wird.

## Patentansprüche

1. Verfahren zum Transport von Wasserstoff in einem Stoffkreislauf umfassend folgende Schritte:
a) Bereitstellen von Wasserstoff an einem ersten Ort
b) Umsetzung des Wasserstoffs direkt oder indirekt mit einer ersten Bor-Verbindung, um Borazan zu erhalten
c) Transport des Borazans an einen zweiten Ort
d) Freisetzung des Wasserstoffs aus dem Borazan unter Erhalt einer zweiten Borverbindung
e) Transport der zweiten Borverbindung direkt oder nach weiterer Umwandlung an den ersten Ort.

2. Verfahren nach Anspruch 1, wobei die indirekte Umsetzung die Umsetzung des Wasserstoffs zu Ammoniak oder einer Ammoniumverbindung umfasst, die mit einer Borverbindung zu Boarazan reagiert.

3. Verfahren nach Anspruch 1 oder 2, wobei das Verfahren weiterhin umfasst
- Lagern des Borazans am ersten, am zweiten und/oder an einem dritten Ort.

4. Verfahren nach Anspruch 3, wobei das Lagern für mindestens 30 Tage erfolgt.

5. Verfahren nach einem der vorhergehenden Ansprüche, wobei der Abstand des ersten und des zweiten Ortes mehr als 100 km, bevorzugt mehr als 500 km beträgt.

6. Verfahren nach einem der vorhergehenden Ansprüche, wobei der Transport des Borazans als Pulver oder in Lösung erfolgt.

7. Verfahren nach einem der vorhergehenden Ansprüche, wobei die erste Bor-Verbindung und die zweite Bor-Verbindung identisch sind.

8. Verfahren nach einem der vorhergehenden Ansprüche, wobei die erste und/oder die zweite Borverbindung (BN)ₓ ist.

9. Verfahren nach einem der vorhergehenden Ansprüche, wobei die erste und/oder die zweite Borverbindung BO₃³⁻ umfasst.

10. Verfahren nach einem der vorhergehenden Ansprüche, wobei die Freisetzung im Schritt d) durch Erhitzen, durch Säure oder einen heterogenen Katalysator erfolgt.

11. Verfahren nach Anspruch 10, wobei der heterogene Katalysator Platin umfasst.

12. Verfahren nach einem der vorhergehenden Ansprüche, umfassend die Umwandlung der zweiten Borverbindung in die erste Borverbindung.

13. Verwendung von Borazan als Lagerungsform von Wasserstoff.

14. Verwendung nach Anspruch 13, wobei der Lagerungszeitraum mindestens 30 Tage beträgt.

15. Verwendung nach Anspruch 13 oder 14, wobei die Lagerung des Borazans als Pulver oder in Lösung erfolgt.
